**Europäisches Patentamt**

**European Patent Office**

**Office européen des brevets**

(11) Veröffentlichungsnummer: **0 359 854**

**A1**

# (12) EUROPÄISCHE PATENTANMELDUNG

(21) Anmeldenummer: 88115494.2

(22) Anmeldetag: 21.09.88

(51) Int. Cl.5: **H02K 23/66 , H02K 11/00**

(43) Veröffentlichungstag der Anmeldung:
28.03.90 Patentblatt 90/13

(84) Benannte Vertragsstaaten:
**DE ES FR GB IT**

(71) Anmelder: **Siemens Aktiengesellschaft
Wittelsbacherplatz 2
D-8000 München 2(DE)**

(72) Erfinder: **Fuss, Matthias, Dipl.-Ing. FH
Küsterbergstrasse 8
D-8701 Zell(DE)**

(54) Drehzahlmessvorrichtung für einen rotorbewickelten Elektromotor.

(57) Zur einfachen Drehzahlerfassung bei einem rotorbewickelten Elektromotor mit jeweils einer Isolierendscheibe (25 bzw.26) zwischen den Wickelköpfen (23 bzw.24) der Rotorwicklung und den Stirnseiten des Rotorblechpaketes (22) sind erfindungsgemäß zumindest ein an eine Drehzahlauswertevorrichtung anschließbarer magnetisch oder optisch beeinflußbarer Sensor (3 bzw.4) im Stator (1) des Elektromotors angeordnet und die Isolierendscheibe (25 bzw.26) als den Sensor (3 bzw.4) beeinflussendes Polrad (N;S) ausgebildet.

FIG 1

FIG 2

FIG 3

EP 0 359 854 A1

## Drehzahlmeßvorrichtung für einen rotorbewickelten Elektromotor

Die Erfindung bezieht sich auf eine Drehzahlmeßvorrichtung für einen rotorbewickelten Elektromotor gemäß Oberbegriff des Anspruchs 1; ein derartiger Elektromotor ist durch die DE-PS 35 29 483 bekannt.

Elektromotoren der vorgenannten bekannten Art werden z.B. als netzgespeiste Universalmotoren für drehzahlgeregelte Kleinantriebe für Haushaltsgeräte, wie Waschmaschinen, Staubsauger, Handmixer etc. und als gleichstromgespeiste Kommutatormotorantriebe für Kraftfahrzeug-Hilfsantriebe, wie Ventilatoren, Fensterheber etc. benutzt. Zur Erfassung des jeweiligen Drehzahl-Istwertes ist die Verwendung von z.B. an die Rotorwelle extern angekoppelter Tachogeneratoren allgemein bekannt.

Diese Tachogeneratoren bestehen aus einem gesonderten, mit dem Rotor des Motors drehenden magnetischen oder optischen Rasterrad und einem zugeordneten Sensor, wobei beide Teile im allgemeinen in einem gesonderten Gehäuse untergebracht sind.

Gemäß Aufgabe vorliegender Erfindung soll für rotorbewickelte Elektromotoren der eingangs genannten Art auf konstruktiv einfachere, insbesondere fertigungs- und montagetechnisch aufwandsärmere und trotzdem betriebssichere Weise eine Erfassung der jeweils augenblicklichen Drehzahl und/oder gegebenenfalls Drehrichtung ermöglicht werden.

Die Lösung dieser Aufgabe gelingt bei einem rotorbewickelten Elektromotor der eingangs genannten Art erfindungsgemäß durch die Lehre des Anspruchs 1; vorteilhafte Ausgestaltungen der Erfindung sind jeweils Gegenstand der Unteransprüche.

Die erfindungsgemäße Integration der für die Drehzahl- und/oder Drehrichtungserkennung notwendige ruhenden Bauteile in Form von Sensoren innerhalb des an sich vorhandenen Stators und der rotierenden Bauteile in Form von magnetischen oder optischen Polen eines Polrades unter Benutzung der an sich vorhandenen, jedoch für einen anderen Verwendungszweck vorgesehenen Isolierendscheibe erübrigt besondere zusätzliche Halte- und Gehäusebauteile und ist in der Regel ohne aufwendige spezifische Konstruktionsanpassungen der an sich vorhandenen mitbenutzten Bauteile und ohne wesentlichen zusätzlichen Einbauraum durchführbar, wobei gleichzeitig eine gehäusegeschützte und gegebenenfalls notwendige feuchtigkeitsdichte Unterbringung durch die Anordnung der Bauteile innerhalb des an sich vorhandenen Motorgehäuses automatisch mit gewährleistet ist.

Zur Ausbildung der Isolierendscheibe als magnetisches Polrad ist nach einer Ausgestaltung der Erfindung vorgesehen, dem zum Spritzen der Isolierendscheibe verwendeten Kunststoff ein kunststoffbindbares Magnetmaterial, insbesondere Ferrit-Partikel, beizumischen, die nach dem Erhärten des Kunststoffes vor oder nach der motorseitigen Montage der Isolierendscheibe auf einfache Weise magnetisierbar sind.

Bei Mitbenutzung der Isolierendscheibe als optisches Polrad genügt es in besonders einfacher Weise, die Isolierendscheibe aus einem Material solcher Helligkeit herzustellen, daß in für den optischen Sensor hinreichender Unterscheidungsmöglichkeit eine Helligkeitserkennung der Rotorzahnabdeckungen gegenüber dem die zwischen den Rotorzahnabdeckungen liegenden Lücken ausfüllenden Wickelmaterial erkennbar ist. Zweckmäßigerweise wird eine wechselnde Polfolge für das Polrad vorgesehen, die gerade der Zahl der Rotorzahnabdeckungen bzw. der zwischenliegenden Nutlücken am Außenrand der Isolierendscheibe entspricht.

Bei Verwendung eines statorseitig permanentmagnetisch erregten Universal- bzw. Kommutatormotors mittels über den Umfang des Statorgehäuses in gegenseitigem tangentialen Abstand gehalterten Teilschalenmagneten kann in konstruktiv und fertigungstechnisch besonders aufwandsarmer Weise eine Halterung der Sensoren in den tangentialen Lücken zwischen den Teilschalenmagneten vorgesehen sein.

Um auf einfache Weise auch eine Drehrichtungserkennung zu ermöglichen, ist nach einer Ausgestaltung der Erfindung vorgesehen, daß an jeder Stirnseite des Statorblechpaketes zumindest ein Sensor mit zugeordneter drehzahlgegebener Isolierendscheibe und der Sensor der einen Stirnseite gegenüber dem Sensor der anderen Stirnseite, bezogen auf die Polteilung des Polrades, am Umfang versetzt angeordnet ist. Bei einem Rotor mit sogenanntem geschränkten Rotorblechpaket, d.h. nicht axial fluchtend verlaufenden Nuten, können die Sensoren beider Stirnseiten in der gleichen Lücke zwischen zwei Teilschalenmagneten angeordnet sein, um einen hinreichenden Versatz, bezogen auf die Polteilung des Polrades, für eine Drehrichtungserkennung zu gewährleisten.

Die Erfindung sowie vorteilhafte weitere Ausgestaltungen der Erfindung werden im folgenden anhand eines schematisch dargestellten Ausführungsbeispieles in der Zeichnung näher erläutert; darin zeigen:

FIG 1 einen axialen Längsschnitt durch einen Kommutatormotor mit permanenterregtem Stator gemäß Schnittverlauf I-I in FIG 2,

FIG 2 eine stirnseitige Draufsicht auf den Statorteil des in FIG 1 dargestellten Kommutatormotors gemäß Ansicht I-I in FIG 1,

FIG 3 in vergrößerter Darstellung eine einzelne, als magnetisches Polrad mitbenutzte Isolierendscheibe.

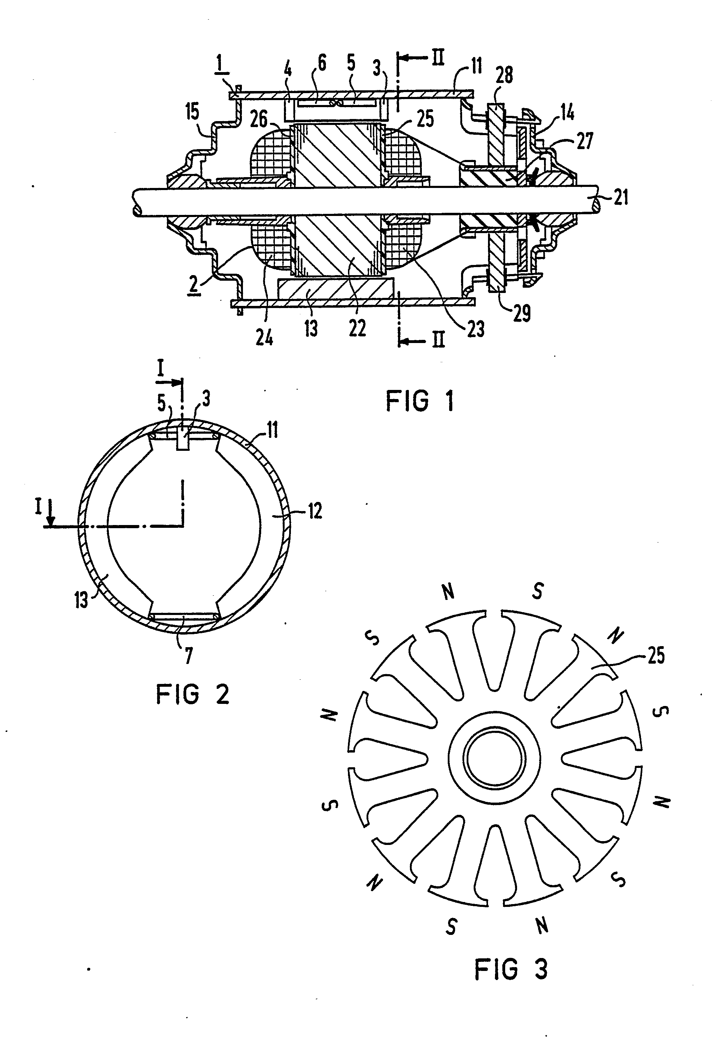

FIG 1 zeigt einen z.B. aus einem Kraftfahrzeug-Bordnetz gespeisten Kommutatormotor zum Antrieb eines Kraftfahrzeug-Ventilators. Der Stator 1 besteht im wesentlichen aus einem Statorgehäuse 11 mit an dessen innerem Umfang gehaltenen Teilschalenmagneten 12,13 für eine permanentmagnetische Statorerregung und an beiden Stirnseiten des Statorgehäuses 11 befestigten Lagerschilde 14,15. Der in von den Lagerschilden 14,15 aufgenommenen Lagern drehbar gelagerte Rotor 2 besteht im wesentlichen aus einer Rotorwelle 21, darauf befestigtem, von Bürsten 28,29 beschliffenen Kommutator 27 und auf der Rotorwelle 21 gehalterten Rotorblechpaket 22 mit in dessen Nuten eingebrachter Rotorwicklung mit stirnseitigen Wickelköpfen 23,24. Zwischen den Stirnseiten des Rotorblechpaketes 22 und den Wickelköpfen 23,24 der Rotorwicklung ist je eine Isolierendscheibe 25 bzw.26 vorgesehen.

FIG 3 zeigt in vergrößerter Darstellung eine einzelne, aus Kunststoff hergestellte Isolierendscheibe 25, deren Kunststoff magnetisierbare Ferrit-Partikel beigemischt sind, die derart magnetisiert sind, daß eine wechselnde Polfolge N;S entsprechend den zahnartig über den Umfang verteilten Polzahnabdeckungen entsteht. Dem derart unter Mitbenutzung der an sich vorhandenen Isolierendscheibe 25 gebildeten magnetischen Polrad ist gemäß FIG 1,2 statorseitig ein magnetisch beeinflußbarer Sensor 3 zugeordnet, der in den Lücken zwischen den tangentialen Stirnseiten der Teilschalenmagneten 12,13 vorzugsweise zwischen den stirnseitig offenen Schenkeln der die Teilschalenmagnete 12,13 tangential spreizenden und dadurch an den Innenumfang des Statorgehäuses andrückende Bügelfedern 5,6 in hier nicht näher beschriebener Weise gehalten ist.

Um nicht nur eine Drehzahl- sondern auch eine Drehrichtungserkennung mit einfachen Mitteln ermöglichen zu können, ist gemäß FIG 1 auch an der anderen Stirnseite statorseitig ein magnetischer Sensor 4 gehaltert und entsprechend auch an der anderen Stirnseite des Rotorblechpaketes 22 die Isolierendscheibe 26 als magnetisches Polrad ausgebildet. Da beide magnetischen Sensoren 3 bzw.4 axial fluchtend in der gleichen tangentialen Lücke zwischen den Teilschalenmagneten 12,13 angeordnet sind, wird in vorgenanntem Ausführungsbeispiel in hier nicht näher dargestellter Weise ein geschränktes Rotorblechpaket mit nicht axial fluchtend verlaufenden Nuten vorausgesetzt, so daß insofern trotz axial in gleicher Richtung liegenden magnetischen Sensoren bezogen auf die Polteilung der Isolierendscheibe 25 relativ zur Polteilung der Isolierendscheibe 26 ein für die Drehrichtungserkennung hinreichender relativer gegenseitiger Versatz der Sensoren 3 bzw.4 gegeben ist.

## Ansprüche

1. Drehzahlmeßvorrichtung für einen rotorbewickelten Elektromotor mit in Nuten zwischen Rotorzähnen eines Rotorblechpaketes (22) eingebrachter Rotorwicklung und zwischen deren Wickelköpfen (23 bzw.24) und den Stirnseiten des Rotorblechpaketes (22) angeordneten Isolierendscheiben (25 bzw.26) mit entsprechend den abzudeckenden Rotorzähnen bzw. den zwischenliegenden Nutöffnungen lückendem Außenrand, **gekennzeichnet** durch zumindest einen an eine Drehzahlauswertevorrichtung anschließbaren, im Stator (1) des Elektromotors gehaltenen magnetisch oder optisch beeinflußbaren Sensor (3 bzw.4) und die Ausbildung der Isolierendscheibe (25 bzw.26) als zugeordnetes optisches oder magnetisches Polrad (N;S).

2. Drehzahlmeßvorrichtung nach Anspruch 1, **dadurch gekennzeichnet**, daß die Isolierendscheibe (25 bzw.26) im Sinne eines magnetischen Polrades aus Kunststoff mit eingelagertem kunststoffgebundenen Magnetmaterial besteht.

3. Drehzahlmeßvorrichtung nach Anspruch 2, **dadurch gekennzeichnet**, daß dem Kunststoff magnetische Ferrit-Partikel beigemischt sind.

4. Drehzahlmeßvorrichtung nach Anspruch 1, **dadurch gekennzeichnet**, daß die Isolierendscheibe (25 bzw.26) im Sinne eines optischen Polrades aus einem Material unterschiedlicher Helligkeit im Vergleich zu dem die Lücken zwischen den Rotorzahnabdeckungen betriebsmäßig ausfüllenden Material besteht.

5. Drehzahlmeßvorrichtung nach einem der Ansprüche 2 bis 4, **gekennzeichnet** durch eine der Rotorzahnabdeckung der Isolierendscheibe (25 bzw.26) entsprechende wechselnde Polfolge (N,S).

6. Drehzahlmeßvorrichtung mit statorseitiger permanentmagnetischer Erregung mittels über den Umfang in gegenseitigem tangentialen Abstand gehalterten Teilschalenmagneten (12,13) nach einem der Ansprüche 1 bis 5, **dadurch gekennzeichnet**, daß im Bereich zumindest einer Statorblechpaketstirnseite der optisch oder magnetisch beeinflußbare Sensor (3 bzw.4) in den tangentialen Lücken zwischen den Teilschalenmagneten (12,13) angeordnet ist.

7. Drehzahlmeßvorrichtung nach einem der Ansprüche 1 bis 6, **dadurch gekennzeichnet**, daß an jeder Stirnseite des Stators (1) zumindest ein Sensor (3 bzw.4) mit zugeordneter drehzahlgebender Isolierendscheibe (25 bzw.26) vorgesehen und der Sensor der einen Stirnseite gegenüber dem Sensor der anderen Stirnseite, bezogen auf die Polteilung des Polrades, am Umfang des Stators versetzt angeordnet ist.

88 P 3 3 9 6 E

FIG 1

FIG 2

FIG 3

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int. Cl.4) |
|---|---|---|---|
| Y | EP-A-0 259 025  (JOHNSON ELECTRIC CORP.) <br> * Spalte 4, Zeilen 21-45; Abb. 1,3A,3B * <br> --- | 1,2 | H 02 K   23/66 <br> H 02 K   11/00 |
| Y | PATENT ABSTRACTS OF JAPAN <br> Band 12, Nr. 187 (E-615)(3034), 31. Mai 1988; & JP - A - 62 290 344 (TOSHIBA) 17.12.1987 <br> --- | 1,2 | |
| A | DE-A-3 151 558  (SWF-SPEZIALFABRIK FUER AUTOZUBEHOER G. RAU) <br> * Seite 9, Zeilen 1-4; Abb. 4 * <br> --- | 1 | |
| A | PATENT ABSTRACTS OF JAPAN <br> Band 7, Nr. 200 (E-196)(1345), 3. September 1983; & JP - A - 58 099 242 (NIKON SAABO) 13.06.1983 <br> ----- | 4 | |

RECHERCHIERTE SACHGEBIETE (Int. Cl.4)

H 02 K   23/00
H 02 K   11/00
H 02 K   29/00
H 02 K    7/00
G 01 P    3/00

Der vorliegende Recherchenbericht wurde für alle Patentansprüche erstellt

| Recherchenort | Abschlußdatum der Recherche | Prüfer |
|---|---|---|
| BERLIN | 28-04-1989 | LEOUFFRE M. |